# EUROPEAN PATENT APPLICATION

(11) **EP 2 290 300 A1**
(43) Date of publication of application: **02.03.2011**
(21) Application number: 10744647.8
(22) Date of filing: 17.02.2010
(51) Int. Cl.: F24H 1/18, F24H 1/00, F25B 27/02, H01M 8/00, H01M 8/04

(54) **FUEL CELL COGENERATION SYSTEM**

(30) Priority: 24.03.2009 JP 2009071322
(71) Applicant: Panasonic Corporation, Osaka 540-6207 (JP)
(72) Inventor: MATSUMOTO, Satoshi, Osaka-shi, Osaka 540-6207 (JP)
(74) Representative: Schwabe - Sandmair - Marx
(86) International application number: PCT/JP2010/001002
(87) International publication number: WO 2010/109757

(57) **Abstract**

An object of the present invention is to provide a highly reliable fuel cell cogeneration system that assures safety during maintenance by a simple structure.

A fuel cell cogeneration system includes: a heat recovery channel (8) in which a first shutoff valve (16), a heat-recovery heat exchanger (4) for recovering exhaust heat developing when a fuel cell (7) generates electricity, a second shutoff valve (17), and a hot water storage tank (1) are sequentially and circularly connected by a heat recovery pipe (3). A heat recovery channel pressure release valve (18) is provided in the heat recovery pipe (3) connecting the first shutoff valve (16), the second shutoff valve (17), and the heat-recovery heat exchanger (4), and is configured to open when internal pressure of the heat recovery pipe (3) closer to the heat-recovery heat exchanger (4) than the first shutoff valve (16) and the second shutoff valve (17) exceeds predetermined pressure.

## Description

### Technical Field

The present invention relates to a fuel cell cogeneration system configured to generate hot water by recovery and utilization of exhaust heat of a fuel cell.

### Background Art

A fuel cell configured to generate electric energy by a direct reaction between hydrogen and oxygen exhibits high power generation efficiency and emits very few air pollutants. Hence, the fuel cell has recently been expected as a clean electric power generator. In particular, a fuel cell cogeneration system configured to recovers and utilizes exhaust heat generated during electric power generation of a fuel cell exhibits high general energy efficiency, and the fuel cell cogeneration system is expected to proliferate as an energy saving apparatus. A common method for recovering and utilizing exhaust heat of the fuel cell includes heating water in a hot water tank by use of a heat exchanger for heat recovery purpose and utilizing the heated water as hot water.

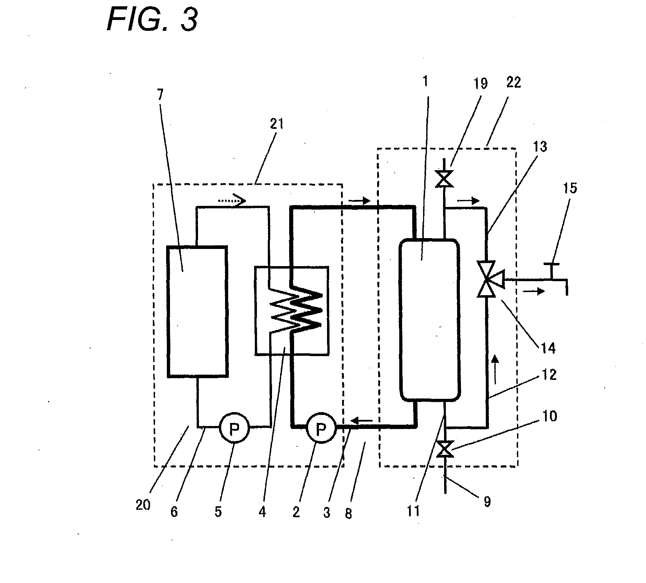

As shown in Fig. 3, a conventional fuel cell cogeneration system includes, for example, a fuel cell unit 21 for storing a fuel cell 7 and a heat-recovery heat exchanger 4 and a hot water storage unit 22 for storing a hot water storage tank 1 (see, for example, Patent Document 1).

As shown in Fig. 3, the hot water storage tank 1, a stored hot water circulation pump 2, and the heat-recovery heat exchanger 4, are sequentially and circularly joined by a heat recovery pipe 3, thereby forming a heat recovery channel 8. On the contrary, the fuel cell 7, the cooling water circulation pump 5, and the heat-recovery heat exchanger 4 are sequentially and circularly joined by a cooling water pipe 6, thereby forming a cooling water channel 20.

Exhaust heat generated when the fuel cell 7 generates electricity is recovered by cooling water. By the cooling water circulation pump 5, the cooling water is conveyed to the heat-recovery heat exchanger 4, where water circulated from the hot water storage tank 1 is heated. The water in the hot water storage tank 1 is circulated through the heat recovery channel 8 by the stored hot water circulation pump 2, and heated by the cooling water, etc. of the fuel cell 7 in the heat-recovery heat exchanger 4. Thereafter, the water is again stored in the hot water storage tank 1.

In order to feed water to the hot water storage tank 1 or feed hot water to the outside from the hot water storage tank 1, the fuel cell cogeneration system includes a feed water inlet pipe 9, a pressure reducing valve 10, a first feed water pipe 11, a second feed water pipe 12, a tapping pipe 13, a mixing valve 14, and a hot water feed outlet pipe 15.

Water is fed to the hot water storage tank 1 from the feed water inlet pipe 9 connected to a general water supply pipe via the pressure reducing valve 10 and the first feed water pipe 11. In relation to feeding of hot water from the hot water storage tank 1, water fed via the feed water inlet pipe 9, the pressure reducing valve 10, and the second feed water pipe 12 and hot water fed from a top of the hot water storage tank 1 via the tapping pipe 13 are mixed to have an appropriate temperature by the mixing valve 14, and the mixed water is fed to the outside via the hot water feed outlet pipe 15.

In the fuel cell cogeneration system having the configuration, a hot water storage tank pressure release valve 19 is usually disposed so as to communicate with the hot water storage tank 1.

According to Patent Document 1, effects of the hot water storage tank pressure release valve 19 are accomplished as follows. That is, water stored in the hot water storage tank 1 having a hermetic structure is heated by exhaust heat of the fuel cell 7 and expands, and internal pressure of the hot water storage tank 1 is increased by heating and expansion of water. The hot water storage tank pressure release valve 19 is released at a predetermined pressure, whereby a portion of expanded water escapes to the outside. Consequently, an increase in pressure of the hot water storage tank 1 is prevented, so that the hot water storage tank 1 can be protected.

The heat recovery pipe 3 provided between the fuel cell unit 21 and the hot water storage unit 22 is usually equipped with a maintenance shutoff valve (not shown). When the fuel cell unit 21 or the hot water storage unit 22 undergoes maintenance, the shutoff vale is closed, to thus disconnect the heat recovery channel 8 and thereby stop an unwanted water leak.

### Prior Art Document

### Patent Document

Patent Document 1: JP-A-2002-280031

### Summary of the Invention

### Problem to be Solved by the Invention

However, in the related art configuration, release of the shutoff valve, which should be performed after completion of maintenance of the fuel cell unit 21 or the hot water storage unit 22, may be forgotten. When the fuel cell cogeneration system is left while the shutoff vale remains closed, the heat recovery channel 8 in the fuel cell unit 21 turns into a closed space, so that extraordinary high pressure develops in the heat recovery channel 8 along with operation of the fuel cell 7 for reasons of expansion of water. Consequently, there arises a problem of damage to components in the heat recovery channel 8, such as a pipe, a pump, and a heat exchanger.

The present invention was made to solve the problem, and an object thereof is to provide a highly reliable fuel cell cogeneration system that avoids occurrence of a failure attributable to maintenance by a simple structure, to thus assure safety.

### Means for Solving the Problem

In order to solve the problem, a fuel cell cogeneration system of the present invention comprises a heat recovery channel in which a first shutoff valve, a heat-recovery heat exchanger that recovers exhaust heat developing when a fuel cell generates electricity, a second shutoff valve and a hot water storage tank are sequentially and circularly connected by a heat recovery pipe. A heat recovery channel pressure release valve is provided in the heat recovery pipe connecting the first shutoff valve, the second shutoff valve and the heat-recovery heat exchanger. The heat recovery channel pressure release valve is configured to open when internal pressure of the heat recovery pipe closer to the heat-recovery heat exchanger than the first shutoff valve and the second shutoff valve exceeds predetermined pressure.

Even when the fuel cell cogeneration system is left while the shutoff valves are closed after maintenance of the fuel cell unit or the hot water storage unit has been completed, the heat recovery channel can thereby be opened at predetermined pressure. Therefore, it is possible to prevent an increase in internal pressure of the heat recovery pipe caused by heating an interior of the heat recovery pipe during operation of the fuel cell. Consequently, there can be provided a highly reliable fuel cell cogeneration system that assures safety and that can prevent damages to components in the heat recovery pipe, such as a channel, a pump, and a heat exchanger.

### Advantages of the Invention

The present invention can provide a fuel cell cogeneration system with enhanced safety and reliability by a simple structure.

### Brief Description of the Drawings

Fig. 1 is a schematic diagram of a fuel cell cogeneration system of a first embodiment.
Fig. 2 is a schematic diagram of a fuel cell cogeneration system of a second embodiment.
Fig. 3 is a schematic diagram of a related art fuel cell cogeneration system.

### Best Mode for Carrying Out the invention

In a first aspect, a fuel cell cogeneration system includes a heat recovery channel in which a first shutoff valve, a heat-recovery heat exchanger configured to recover exhaust heat developing when a fuel cell generates electricity, a second shutoff valve, a hot water storage tank are sequentially and circularly connected by a heat recovery pipe, wherein a heat recovery channel pressure release valve is provided in the heat recovery pipe that connects the first shutoff valve, the second shutoff valve, and is configured to open when internal pressure of the heat recovery pipe located closer to the heat-recovery heat exchanger than to the first shutoff valve and the second shutoff valve exceeds predetermined pressure.

Even when the shutoff valves are left in a closed state after maintenance of the fuel cell unit or the hot water storage unit is completed, the heat recovery channel can thereby be opened at predetermined pressure. Therefore, an increase in internal pressure of the heat recovery pipe, which would otherwise be caused when an interior of the heat recovery pipe is heated during operation of the fuel cell, can be prevented. As a consequence, there can be provided a highly reliable fuel cell cogeneration system that assures safety and that can prevent damages to components in the heat recovery channel, such as a pipe, a pump, and a heat exchanger.

In a second aspect based on the first aspect, the system includes a hot water storage tank pressure release valve configured to open when internal pressure of the hot water storage tank exceeds predetermined pressure. The predetermined pressure at which the heat recovery channel pressure release valve performs opening action is set higher than the predetermined pressure at which the hot water storage tank pressure release valve performs opening action. As a result, there can be implemented a fuel cell cogeneration system in which, even if the hot water storage tank pressure release valve has become broken, the heat recovery channel pressure release valve serves as a double safety device, thereby making it possible to prevent occurrence of an extraordinary pressure increase.

In a third aspect based on the first or second aspect, the heat recovery channel pressure release valve is configured to function as a drain cock for draining water from an inside of the heat recovery channel. Draining of water incidental to maintenance and release of pressure incidental to occurrence of an anomaly during maintenance can be performed by an extremely simple structure.

In a fourth aspect based on the third aspect, the heat recovery channel pressure release valve is placed in a relatively low area of the heat recovery pipe on an upstream side of the heat-recovery heat exchanger. By utilization of self-weight of water, water can readily be drained from the heat recovery pipe and the heat-recovery heat exchanger during maintenance.

In a fifth aspect based on the first or second aspect, the heat recovery channel pressure release valve is configured to function as an air feed cock for discharging air in the heat recovery channel. Release of air incidental to heating of water and release of pressure incidental to occurrence of an anomaly during maintenance can be performed by an extremely simple structure.

In a sixth aspect based on the fifth aspect, the heat recovery channel pressure release valve is provided in a relatively high area of the heat recovery pipe on a downstream side of the heat-recovery heat exchanger. By utilization of the fact that the density of air developing at the time of heating of water is small, it thereby becomes possible to easily let air escape from the heat recovery pipe and the heat-recovery heat exchanger.

In a seventh aspect based on the first aspect, the system includes at least a fuel cell unit storing the fuel cell and the heat recovery heat exchanger and a hot water storage unit storing the hot water storage tank. The heat recovery channel pressure release valve is placed in the heat recovery pipe that connects the fuel cell unit to the hot water storage unit. Water and air that flow out at release of the internal pressure of the heat recovery pipe are readily discharged outside of the respective units, thereby preventing preservation of unwanted water.

Although embodiments of the fuel cell cogeneration system are hereunder described by reference to the accompanying drawings, the configuration of the system identical with the previously-described related art configuration is assigned the same reference numeral, and its detailed explanation is omitted. The fuel cell cogeneration system shall not be limited to these embodiments.

### (First Embodiment)

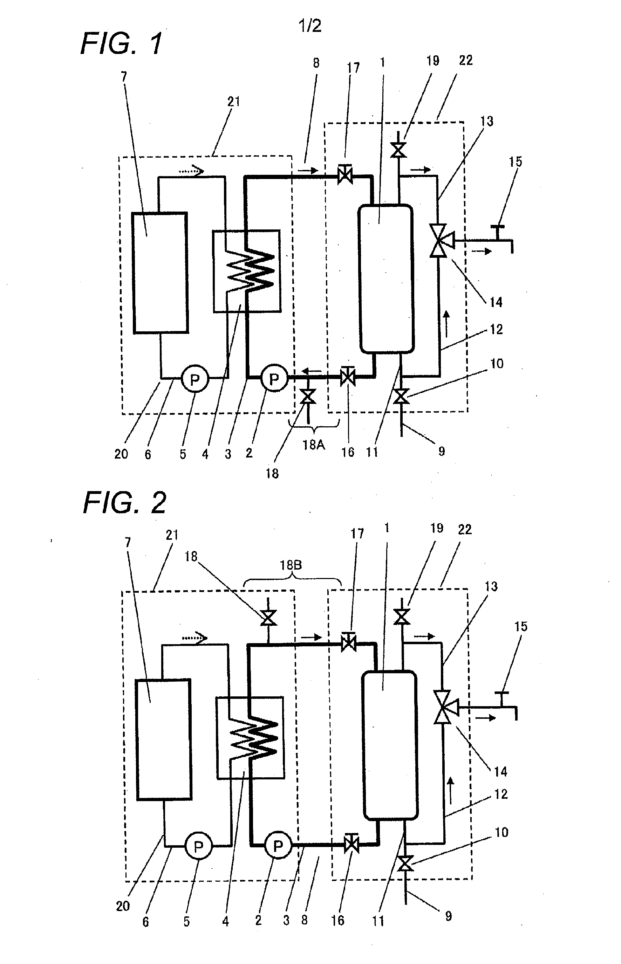

Fig. 1 is a schematic diagram of a fuel cell cogeneration system of a first embodiment.

As shown in Fig. 1, the fuel cell cogeneration system of the present embodiment includes a fuel cell unit 21 storing a fuel cell 7 and a heat-recovery heat exchanger 4; and a hot water storage unit 22 storing a hot water storage tank 1, wherein a heat recovery channel pressure release valve 18 is provided in a heat recovery pipe 3 connecting the fuel cell unit 21 to the hot water storage unit 22.

The hot water storage tank 1, a stored hot water circulation pump 2, and the heat-recovery heat exchanger 4 configured to exhaust heat generated when the fuel cell 7 generates electricity are sequentially and circularly connected by the heat recovery pipe 3, thereby forming a heat recovery channel 8. The heat recovery pipe 3 located between the fuel cell unit 21 and the hot water storage unit 22 is equipped with a first shutoff valve 16 and a second shutoff valve 17 for maintenance purpose. The fuel cell 7, a cooling water circulation pump 5, and the heat-recovery heat exchanger 4 are sequentially and circularly connected by a cooling water pipe 6, thereby forming a cooling water channel 20.

The exhaust heat generated when the fuel cell 7 generates electricity is recovered by cooling water in the cooling water channel 20, and the cooling water is conveyed to the heat-recovery heat exchanger 4 by the cooling water circulation pump 5, whereby water circulated from the hot water storage tank 1 is heated. Water in the hot water storage tank 1 is circulated through the heat recovery channel 8 by the stored hot water circulation pump 2 and is heated by the cooling water that has absorbed the exhaust heat of the fuel cell 7 in the heat-recovery heat exchanger 4. Thereafter, the water is again stored in the hot water storage tank 1.

A heat recovery channel pressure release valve 18 is provided in the heat recovery pipe 3 at a position closer to the heat-recovery heat exchanger 4 than the first shutoff valve 16 and the second shutoff valve 17. When pressure of the heat recovery pipe 3 exceeds predetermined pressure, the release valve 18 opens, thereby holding internal pressure of the heat recovery pipe 3 at the predetermined pressure level or below. The hot water storage tank 1 is connected to a hot water storage tank pressure release valve 19 configured to open when internal pressure of the hot water storage tank 1 exceeds predetermined pressure, thereby holding the internal pressure of the hot water storage tank 1 at the predetermined pressure level or below.

The predetermined pressure at which the heat recovery channel pressure release valve 18 performs opening action is set higher than the predetermined pressure at which the hot water storage tank pressure release valve 19 performs opening action.

The heat recovery channel pressure release valve 18 may have a function capable of serving as a drain cock for draining water in the heat recovery channel 8.

As the heat recovery channel pressure release valve 18 and the hot water storage tank pressure release valve 19 having such functions, it is preferable to have a shape of a hollow cylinder having open double ends and a structure for urging a valve element in the cylinder by spring force. In this case, the valve element automatically moves against the spring force due to an increase in internal pressure, thereby opening a portion of the heat recovery channel 8, so that the internal pressure escapes to the outside via the cylinder. At this time, as described below, an outer periphery of the heat recovery channel pressure release valve 18 can also be formed, for example, into a shape that allows screw engagement, and a portion of the heat recovery channel 8 can also be manually opened. Accordingly, by removing the heat recovery channel pressure release valve 18, the heat recovery channel pressure release valve 18 can be used also as a drain cock configured to drain water from the heat recovery pipe 3.

When the heat recovery channel pressure release valve 18 is used as a drain cock, the valve is preferably disposed upstream of the heat-recovery heat exchanger 4 and in a relatively low area 18A of the heat recovery pipe 3 as shown in Fig. 1. For example, the heat recovery channel pressure release valve may be placed directly on a pipe joint (not shown) for connecting the heat recovery pipe 3 located outside the fuel cell unit 21 to the fuel cell unit 21, or may be placed at a lowermost position on a pipe that connects the pipe joint to the heat-recovery heat exchanger 4 disposed in the fuel cell unit 21. The relatively low area 18A means a lower area of the heat recovery pipe 3 between the first shutoff vale 16 and the stored hot water circulation pump 2 when the hot water storage unit 22 and the fuel cell unit 21 are stationarily placed. At this time, it is preferable to provide the heat recovery channel pressure release valve 18 at a lowermost portion of the relatively lower area 18A. So long as the water circulating through the heat recovery pipe 3 in the relatively low area 18A does not become full as a result of the water being drained by the heat recovery channel pressure release valve 18, the drain cock does not need to be disposed at the lowermost portion. Since water in the heat recovery channel 8, particularly, water in the heat-recovery heat exchanger 4 falls under its own weight. Therefore, a quantity of water remaining in the heat recovery channel can be minimized. Further, when the fuel cell cogeneration system is used in cold areas, fracture of the heat recovery pipe 3 caused by freezing can be prevented.

In order to feed water to the hot water storage tank 1 or from the hot water storage tank 1 to the outside, the fuel cell cogeneration system of the embodiment includes the feed water inlet pipe 9, the pressure reducing valve 10, the first feed water pipe 11, the second feed water pipe 12, the tapping pipe 13, the mixing valve 14, and the hot water feed outlet pipe 15.

Water is fed to the hot water storage tank 1 from the feed water inlet pipe 9 connected to the water supply pipe via the pressure reducing valve 10 and the first feed water pipe 11. In relation to feeding of hot water from the hot water storage tank 1, water fed via the feed water inlet pipe 9, the pressure reducing valve 10 and the second feed water pipe 12 and hot water fed from a top of the hot water storage tank 1 via the tapping pipe 13 are mixed to an appropriate temperature by the mixing valve 14, and the mixed hot water is fed to the outside via the hot water feed outlet pipe 15.

Even in the embodiment, the hot water storage tank pressure release valve 19 is disposed so as to communicate with the hot water storage tank 1, in the same manner as in the related art. That is, an increase in internal pressure caused by an expansion of water stored in the hot water storage tank 1 having a hermetic structure due to exhaust heat of the fuel cell 7 is released by the hot water storage tank pressure release valve 19 which opens at a predetermined pressure. A part of the expanded water is thereby released to the outside so as to prevent an increase in pressure of the hot water storage tank 1, so that the hot water storage tank 1 can be protected.

Similar to the related art, the heat recovery pipe 3 interposed between the fuel cell unit 21 and the hot water storage unit 22 is equipped with the first shutoff valve 16 and the second shutoff valve 17 for maintenance purposes. When the fuel cell unit 21 is subjected to maintenance, the first shutoff valve 16 and the second shutoff valve 17 are closed so as to disconnect the heat recovery channel 8 from the hot water storage unit 22. An unwanted water leak can be prevented.

According to the fuel cell cogeneration system of the present embodiment, even when the first shutoff valve 16 and the second shutoff valve 17 are forgotten to be opened after completion of maintenance of the fuel cell unit 21 and the hot water storage unit 22 and are left in a closed state, the heat recovery channel pressure release valve 18 is opened at predetermined pressure, thereby opening the heat recovery channel 8. Therefore, even when an interior of the heat recovery pipe 3 undergoes extraordinary high pressure when the heat recovery pipe 3 is heated during operation of the fuel cell 7, it is possible to prevent an increase in internal pressure of the heat recovery pipe 3 and damages to components in the heat recovery channel 8, such as a pipe, a pump, and a heat exchanger.

According to the fuel cell cogeneration system of the present embodiment, the predetermined pressure at which the heat recovery channel pressure release valve 18 operates to open is set higher than the predetermined pressure at which the hot water storage tank pressure release valve 19 operates to open. Even if the hot water storage tank pressure release valve 19 becomes broken, the heat recovery channel pressure release valve 18 serves as a double safety device, so that occurrence of an extraordinary increase in internal pressure of the hot water storage tank 1 can be avoided.

According to the fuel cell cogeneration system of the present embodiment, the heat recovery channel pressure release valve 18 has a function of a drain cock for draining water from the interior of the heat recovery channel 8. Draining of water incidental to maintenance and release of pressure incidental to an anomaly in maintenance can be performed by an extremely simple configuration. Further, the heat recovery channel pressure release valve 18 is disposed in the relatively low area 18A of the heat recovery pipe 3 and on the upstream side of the heat-recovery heat exchanger 4. During maintenance, draining of water from the heat recovery pipe 3 and the heat-recovery heat exchanger 4 can readily be performed under its own weight of water.

According to the fuel cell cogeneration system of the present embodiment, the heat recovery channel pressure release valve 18 is disposed in the heat recovery pipe 3 that connects the fuel cell unit 21 and the hot water storage unit 22. When the interior of the heat recovery pipe 3 is released at predetermined pressure, water and air escapes to the outside of the fuel cell unit 21 and the hot water storage unit 22, thereby making it possible to prevent preservation of unwanted water.

As described above, according to the present embodiment, there can be provided a highly reliable fuel cell cogeneration system that assures safety during maintenance by a simple structure.

### (Second Embodiment)

Fig. 2 is a schematic diagram of a fuel cell cogeneration system of a second embodiment.

As shown in Fig. 2, the fuel cell cogeneration system of the present embodiment differs from the first embodiment in that the heat recovery channel pressure release valve 18 functions as an air bleed cock which allows air in the heat recovery channel 8 to escape. The configuration and operation of the fuel cell cogeneration system of the present embodiment is substantially identical with that described in the first embodiment, and hence its detailed description is omitted.

As shown in Fig. 2, the fuel cell cogeneration system of the present embodiment includes: the fuel cell unit 21 which stores the fuel cell 7 and the heat-recovery heat exchanger 4; and the hot water storage unit 22 which stores the hot water storage tank 1. The heat recovery channel pressure release valve 18 is placed in the heat recovery pipe 3 that connects the fuel cell unit 21 and the hot water storage unit 22. At this time, the heat recovery channel pressure release valve 18 is disposed in a relatively high area 18B in the heat recovery pipe 3 and on a downstream side of the heat-recovery heat exchanger 4. Specifically, for example, the heat recovery channel pressure release valve 18 is disposed in the vicinity of a pipe connected to an exit of the heat-recovery heat exchanger 4 in the fuel cell unit 21 which allows the water fed from the hot water storage tank 1 to flow from a lower position to a higher position in the vertical direction. The relatively high area 18B means a higher area of the heat recovery pipe 3 between the second shutoff valve 17 and the heat-recovery heat exchanger 4 when the hot water storage unit 22 and the fuel cell unit 21 are stationary placed. At this time, it is preferable to place the heat recovery channel pressure release valve 18 at the highest position in the relatively high area 18B. However, the release valve does not need to be particularly placed at the highest position, so long as the release valve is placed within the relatively high area 18B. The heat recovery channel pressure release valve can function as an air bleed cock that allows air in the heat recovery channel 8 to escape.

As the heat recovery channel pressure release valve 18 having such functions, it is preferable to have a shape of a hollow cylinder having open double ends and a structure for urging a valve element in the cylinder by spring force, similar to the first embodiment. In this case, the valve element automatically moves against the spring force due to an increase in internal pressure, thereby opening a portion of the heat recovery channel 8, so that the internal pressure escapes to the outside via the cylinder.

An advantage of the heat recovery channel pressure release valve 18 also serving as an air bleed cock is hereunder described.

Usually, a little amount of air usually remains dissolved in relatively low-temperature water fed from the hot water storage tank 1. Therefore, when the water is heated by the heat-recovery heat exchanger 4, the dissolved air often causes fine air bubbles. The air remaining in the heat recovery channel 8 sometimes hinders water flow or adheres to a heat conduction surface of the heat-recovery heat exchanger 4, to thus deteriorate heat exchange performance. Accordingly, the problem can be resolved by use of the heat recovery channel pressure release valve 18 as the air bleed cock.

By a considerably simple structure, the fuel cell cogeneration system of the present embodiment can release air generated during heating of water and let pressure caused by an anomaly during maintenance, escape. Air can readily escapes from the heat recovery pipe 3 and the heat-recovery heat exchanger 4 by providing the heat recovery channel pressure release valve 18 at a higher position of the heat recovery pipe. The reason for this is that, because air which arises during heating of water is lower in density than water, the air tends to go up in the heat recovery pipe and stay at a higher position. Consequently, there can be provided a highly reliable fuel cell cogeneration system.

In the present embodiments, the heat recovery channel pressure release valve 18 has been described by reference to the example configuration and arrangement in which the pressure release valve also serves as a drain cock or an air bleed cock. However, the heat recovery channel pressure release valve is not limited thereto. For example, pressure release valve can also be used merely as the heat recovery channel pressure release valve 18. In that case, the heat recovery channel pressure release valve 18 can be disposed at any location on the inside of the fuel cell unit 21, the hot water storage unit 22, or the heat recovery pipe 3 connecting the units 21 and 22, so long as the heat recovery channel pressure release valve 18 is disposed in the heat recovery channel 8 closer to the heat-recovery heat exchanger 4 than the first shutoff valve 16 or the second shutoff valve 17.

The heat-recovery heat exchanger 4 has been described in the each of the embodiments by reference to the example in which the heat exchanger recovers exhaust heat of the fuel cell 7. However, the heat exchanger is not limited to recovery of the exhaust heat. For example, the heat-recovery heat exchanger may recover exhaust heat of an exhaust gas of a hydrogen generator (not shown) provided in the fuel cell cogeneration system or exhaust heat from an anode and a cathode of the fuel cell 7.

Although the present invention has been described in detail and by reference to the specific embodiments, it should be apparent to those skilled in the art that various changes or modifications may be made without departing from the spirit and scope of the present invention.

The present patent application is based on Japanese Patent Application (Application No. 2009-071322) filed on March 24, 2009, the entire contents thereof are incorporated herein by reference.

### Industrial Applicability

The present invention is useful in a technical field, such as fuel cell cogeneration system that assures safety during maintenance by a simple structure and that is desired to achieve high reliability.

### Description of Reference Signs

- 1: HOT WATER STORAGE TANK
- 2: STORED HOT WATER CIRCULATION PUMP
- 3: HEAT RECOVERY PIPE
- 4: HEAT-RECOVERY HEAT EXCHANGER
- 5: COOLING WATER CIRCULATION PUMP
- 6: COOLING WATER PIPE
- 7: FUEL CELL
- 8: HEAT RECOVERY CHANNEL
- 9: FEED WATER INLET PIPE
- 10: PRESSURE REDUCING VALVE
- 11: FIRST FEED WATER PIPE
- 12: SECOND FEED WATER PIPE
- 13: TAPPING PIPE
- 14: MIXING VALVE
- 15: HOT WATER FEED OUTLET PIPE
- 16: FIRST SHUTOFF VALVE
- 17: SECOND SHUTOFF VALVE
- 18: HEAT RECOVERY CHANNEL PRESSURE RELEASE VALVE
- 18A, 18B: AREA
- 19: HOT WATER STORAGE TANK PRESSURE RELEASE VALVE
- 20: COOLING WATER CHANNEL
- 21: FUEL CELL UNIT
- 22: HOT WATER STORAGE UNIT

## Claims

1. A fuel cell cogeneration system comprising:
a heat recovery channel in which a first shutoff valve, a heat-recovery heat exchanger configured to recover exhaust heat of a fuel cell, a second shutoff valve and a hot water storage tank are sequentially and circularly connected by a heat recovery pipe,
wherein a heat recovery channel pressure release valve is provided in the heat recovery pipe connecting the first shutoff valve, the second shutoff valve and the heat-recovery heat exchanger, and is configured to open when internal pressure of the heat recovery pipe closer to the heat-recovery heat exchanger than the first shutoff valve and the second shutoff valve exceeds predetermined pressure.

2. The fuel cell cogeneration system according to claim 1, comprising:
a hot water storage tank pressure release valve configured to open when internal pressure of the hot water storage tank exceeds predetermined pressure,
wherein the predetermined pressure at which the heat recovery channel pressure release valve performs opening action is set higher than the predetermined pressure at which the hot water storage tank pressure release valve performs opening action.

3. The fuel cell cogeneration system according to claim 1 or 2, wherein the heat recovery channel pressure release valve is configured to function as a drain cock for draining water from an inside of the heat recovery channel.

4. The fuel cell cogeneration system according to claim 3, wherein the heat recovery channel pressure release valve is placed in a relatively low area of the heat recovery pipe on an upstream side of the heat-recovery heat exchanger.

5. The fuel cell cogeneration system according to claim 1 or 2, wherein the heat recovery channel pressure release valve is configured to function as an air feed cock for discharging air in the heat recovery channel.

6. The fuel cell cogeneration system according to claim 5, wherein the heat recovery channel pressure release valve is provided in a relatively high area of the heat recovery pipe on a downstream side of the heat-recovery heat exchanger.

7. The fuel cell cogeneration system according to claim 1, comprising:
a fuel cell unit storing the fuel cell and the heat recovery heat exchanger; and
a hot water storage unit storing the hot water storage tank,
wherein the heat recovery channel pressure release valve is placed in the heat recovery pipe that connects the fuel cell unit to the hot water storage unit.
